# FASCICULE DE BREVET EUROPEEN

(11) **EP 2 636 289 B1**
(45) Date de publication et mention de la délivrance du brevet: **29.06.2016**
(21) Numéro de dépôt: 13158016.9
(22) Date de dépôt: 06.03.2013
(51) Int. Cl.: A01B 29/06, A01B 73/00, A01B 29/04

(54) **Machine de modelage du sol à un ou plusieurs rouleaux**
Maschine zum Bodenformen mit einer oder mehreren Walzen
Ground shaping machine with one or more rollers

(30) Priorité: 09.03.2012 FR 1200719
(43) Date de publication de la demande: 11.09.2013
(73) Titulaire: OTICO, 77650 Chalmaison (FR)
(72) Inventeur: Valier, Carlo, 20122 Milano (IT)
(74) Mandataire: Plaçais, Jean Yves

(56) Documents cités:
- EP-A1- 1 380 198
- EP-A1- 1 527 665
- EP-A1- 2 425 697
- FR-A2- 2 117 713

## Description

L'invention concerne une machine de modelage du sol comprenant un ou plusieurs rouleaux permettant de ré-appuyer le sol et/ou de créer dans un sol des sillons pour y semer des graines ou repiquer des plans.

Dans le domaine agricole, une telle machine est par exemple divulguée dans le document FR 2 763 279 au nom de la Demanderesse. Le rouleau de cette machine est équipé de pneumatiques semi-creux et est conçu uniquement pour travailler en champ. Durant le déplacement de la machine sur route, le rouleau doit être porté pour que ses pneumatiques ne roulent pas sur la route, ce qui provoquerait une usure rapide. À cet effet, la machine comportant te rouleau est équipée de mues porteuses escamotables entre une position de travail, où le rouleau repose librement sur le sol, et une position de route, où le rouleau est supporté au-dessus du niveau du sol.

Dans ce type de machine, les roues porteuses, en position de travail, c'est-à-dire escamotées, ne remplissent pas la fonction de préparation du soL En conséquence, la dimension totale du rouleau, ou de l'assemblage de rouleaux, couvre toute la largeur de travail en position de travail. Le cumul des roues porteuses ainsi que des rouleaux sur toute la largeur de travail rend complexe une telle machine agricole. Celle-ci présente une masse élevée, impliquant une consommation énergétique importante.

La Demanderesse a proposé une machine agricole semi-portée dont le rouleau équipé de ses pneumatiques peut successivement travailler en champ pour créer des sillons dans le sol, et rouler sur route sans qu'il soit nécessaire de relever le rouleau. Une telle machine est décrite dans le document FR 2 841 733. Cette machine fait l'économie de roues porteuses escamotables ou système analogue ainsi que des moyens de commande de ces roues porteuses. Ce système donne satisfaction.

Néanmoins, les dimensions, la masse et l'encombrement de telles machines rend complexe leur adaptabilité aux routes, notamment accidentées, lors du transport. Des dispositifs tendant à désolidariser les outils en plusieurs rouleaux incluant un bras de suspension conduisent à limiter la longueur des rouleaux et augmentent la complexité, le coût et la fragilité du dispositif complet. La Demanderesse a proposé un ensemble de rouleau comportant un bras et un levier de suspension. Cela est décrit dans EP 2 425 697. Les performances sont satisfaisantes mais limitées.

L'invention vient améliorer la situation.

L'invention vise essentiellement à proposer une machine de modelage du sol, en particulier une machine agricole, comprenant un châssis, au moins un rouleau muni d'un bandage souple, un premier palier et un second palier de rotation du rouleau autour d'un axe sensiblement horizontal en position de travail, le premier palier et le second palier étant disposés à chacune des extrémités du rouleau.

Conformément à l'invention, le châssis comporte un premier support et un second support, le premier support au moins étant relié au premier palier par l'intermédiaire de moyens de suspension incluant un mécanisme à un bras supérieur et un bras inférieur sensiblement horizontaux et perpendiculaires à l'axe de rotation du rouleau, chacun des bras supérieur et inférieur étant relié par une articulation d'une part au premier support et d'autre part au premier palier, le mécanisme formant un quadrilatère déformable, ainsi qu'un organe de rappel élastique sensiblement vertical relié par une articulation d'une part au premier support et d'autre part au premier palier.

On procure ainsi une machine dont le ou les rouleaux sont suspendus par rapport au châssis. En fonctionnement, c'est-à-dire en roulage lors du transport ou en travail lors du modelage du sol, une partie de l'énergie mécanique subie par les rouleaux au contact du sol n'est pas directement transmise au châssis. Les rouleaux ont alors au moins certains de degrés de liberté par rapport au châssis. Ce dernier est en partie épargné par les irrégularités du terrain, telles que les bosses, trous, obstacles qui peuvent entrer en contact ou même en collision avec les rouleaux. L'intégrité mécanique du châssis est préservée et améliorée.

D'autre part, en particulier lors du transport sur route, les rouleaux au contact du sol présentent une meilleure adaptabilité avec la chaussée. Par exemple, lorsque le profil de la route est légèrement bombé, le ou les rouleaux peuvent présenter une ligne de contact sensiblement courbée dans le plan perpendiculaire à la direction d'avancement. L'adhérence est importante, notamment aux extrémités latérales des rouleaux. Les vitesses de déplacement peuvent ainsi être importantes sans nuire à la sécurité et à la longévité des machines.

Les mécanismes de l'invention présentent une compacité élevée ce qui facilite la combinaison d'une telle machine avec d'autres machines, par exemple des semoirs et/ou des épandeurs. Le nombre et la durée des opérations peuvent être réduits. Les coûts de fabrication et d'utilisation peuvent ainsi être réduits.

Les mécanismes de l'invention présentent une interchangeabilité qui facilite l'entretien et la longévité des machines.

D'autres caractéristiques et avantages de l'invention apparaîtront à l'examen de la description détaillée ci-après, et des dessins annexés, sur lesquels :
- la figure 1 est une vue schématique de l'arrière d'une machine de modelage du sol en position de travail,
- la figure 2 est une vue en perspective de l'avant gauche d'une machine de modelage du sol, dans laquelle une partie du châssis n'est pas représentée,
- la figure 3 est une vue de détail d'une coupe selon l'axe IX-IX de la figure 1,
- la figure 4 est une vue du côté gauche de la machine de la figure 1 selon le plan IV-IV, l'outil gauche n'ayant pas été représenté,
- la figure 5 est une vue similaire à celle de la figure 4 dans laquelle un support n'est pas représenté,
- la figure 6 est une vue en perspective de l'outil droit de la machine de la figure 1, dans laquelle seuls certains éléments ont été représentés,
- la figure 7 est une vue en perspective d'une partie d'un outil de modelage du sol,
- la figure 8 est une vue en perspective d'un palier et de moyens de suspension,

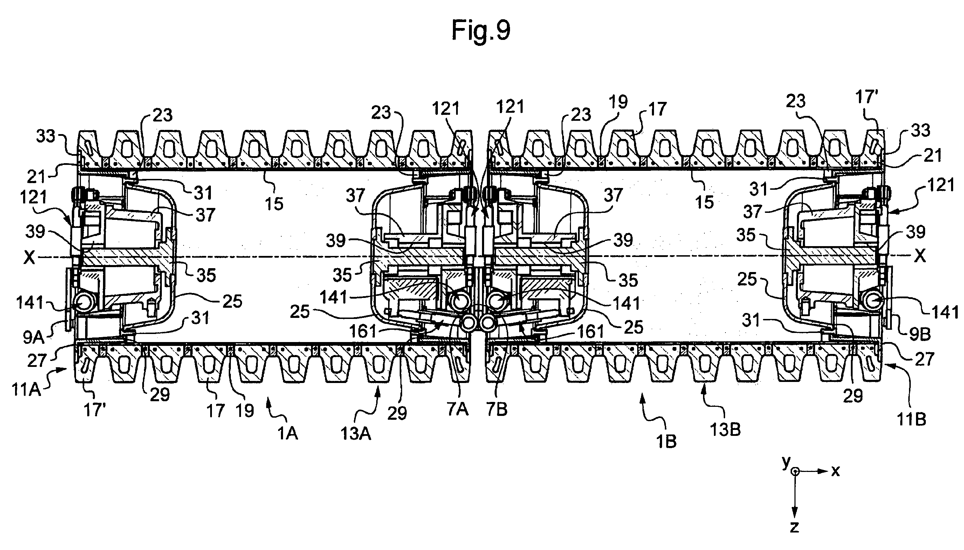

- la figure 9 est une vue en coupe longitudinale selon le plan IX-IX de la machine de la figure 1,
- les figures 10A, 10B et 10C sont des représentations schématiques de divers modes de réalisation de circuits hydrauliques mis en oeuvre dans l'invention,
- la figure 11 est une vue de côté d'un mode de réalisation de l'invention, et
- la figure 12 est une vue analogue à la figure 3 illustrant un moyen de freinage.

Les dessins annexés sont pour l'essentiel de caractère certain, et pourront non seulement servir à compléter l'invention, mais aussi contribuer à sa définition le cas échéant. Il est relevé que des éléments comme le palier ou le flasque sont difficiles à définir complètement, autrement que par le dessin.

Dans la suite, on utilise les termes avant, arrière, haut, bas, droite et gauche en accord avec le sens d'avancement de la machine de modelage du sol en position de travail, c'est-à-dire lorsque cette dernière est en contact avec le sol. Sur chacune des figures, un repère tridimensionnel est représenté. La flèche référencée x représente la direction latérale orientée de la gauche vers la droite. La flèche référencée y représente la direction verticale orientée du bas vers le haut. La flèche référencée z représente la direction d'avancement orientée de l'avant vers l'arrière. Les termes vertical et horizontal ont ici un sens relatif et en référence à un état où la machine repose sur un sol horizontal.

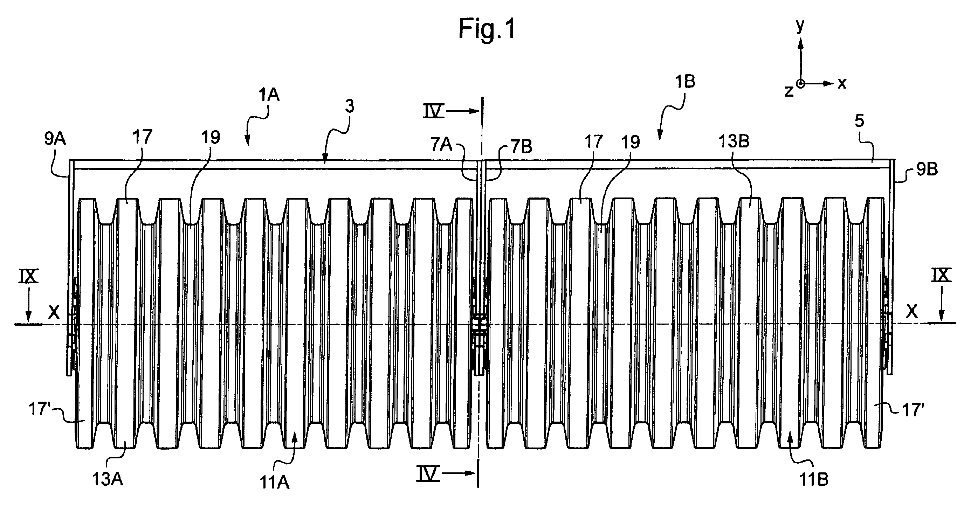

Il est fait référence à la figure 1 qui montre une machine de modelage du sol. Cette machine comprend un ensemble ou outil gauche 1A et un ensemble ou outil droit 1B.

La machine de modelage représentée en figure 1 présente un plan de symétrie IV-IV perpendiculaire à la direction x et au plan de la figure. Pour des raisons de clarté, les éléments homologues de l'ensemble gauche 1A d'une part et de l'ensemble droit 1B d'autre part portent des références numériques identiques suivies de la lettre A pour l'ensemble gauche ou de la lettre B pour l'ensemble droit.

La machine de modelage du sol comprend un châssis 3. Le châssis 3 est destiné à être accroché à un véhicule non représenté, par exemple un tracteur, par des moyens d'accrochage non représentés. Le châssis 3 comprend, dans l'exemple décrit ici, une barre 5 s'étendant sensiblement selon la direction x. Le châssis 3 comprend en outre quatre supports 7A, 7B, 9A, 9B. Les supports 7A, 7B, 9A, 9B sont, dans l'exemple décrit ici, des plaques métalliques de forme générale rectangulaire. Les supports 7A, 7B, 9A, 9B sont sensiblement plans et disposés selon des plans sensiblement parallèles au plan de symétrie IV-IV. La direction de leur longueur est alignée selon la direction y verticale. Deux des supports 9A, 9B sont disposés à chacune des extrémités de la barre 5. Les deux supports d'extrémité 9A, 9B sont fixés solidairement à la barre 5, par exemple au moyen de vis et d'écrous ou soudés. Les deux autres supports 7A, 7B sont fixés solidairement à la barre 5 et sensiblement à mi-longueur de celle-ci. Les supports 7A, 7B, 9A, 9B s'étendent vers le bas depuis la barre 5. Les deux supports 7A, 7B sont en outre fixés solidairement ensemble l'un contre l'autre.

La machine de modelage du sol comprend, ici, deux rouleaux 11A, 11B. Au repos, les rouleaux 11A et 11B sont sensiblement alignés selon la direction x et présentent donc des axes de révolution XX sensiblement confondus. Les rouleaux 11A, 11B ont une longueur inférieure à la moitié de la longueur de la barre 5, soit une longueur inférieure à la distance séparant le support central 7A, respectivement 7B, du support d'extrémité 9A, respectivement 9B. Les rouleaux 11A, 11B sont disposés entre leurs supports respectifs 7A, 9A, respectivement 7B, 9B.

Les parties droite et gauche de la machine forment deux ensembles qui sont, dans l'exemple décrit ici, sensiblement symétriques l'un de l'autre selon le plan vertical perpendiculaire à la direction x et à l'interface des deux rouleaux 11A et 11B. Le châssis 3 est quant à lui commun à ces deux ensembles. Les deux ensembles sont spéculaires selon le plan précité.

Le châssis 3 n'est pas nécessairement réalisé d'une seule pièce pour supporter les deux rouleaux, ni solidaire de la structure de la machine.

Les deux rouleaux suspendus 11A et 11B ne sont pas obligatoirement jointifs comme montré sur la figure 1. Il peut y avoir au centre, entre les rouleaux, une section intermédiaire de rouleau rigide ayant une fonction de modelage dans le travail en position « champ » et qui ne touche pas le sol en position « route ». Avec ou sans section intermédiaire entre les rouleaux, et notamment pour des raisons de montage, chaque rouleau peut aussi avoir son propre châssis qui pourra être solidarisé au montage avec le châssis d'un rouleau adjacent.

Pour passer de la position « champ » à la position « route », les rouleaux doivent descendre par rapport au reste de la machine. Il en résulte que les châssis des rouleaux suspendus ne sont donc pas solidaires de la structure de la machine. La liaison entre les châssis des rouleaux et la structure de la machine pourra être assurée alors par un mécanisme de translation ou de rotation.

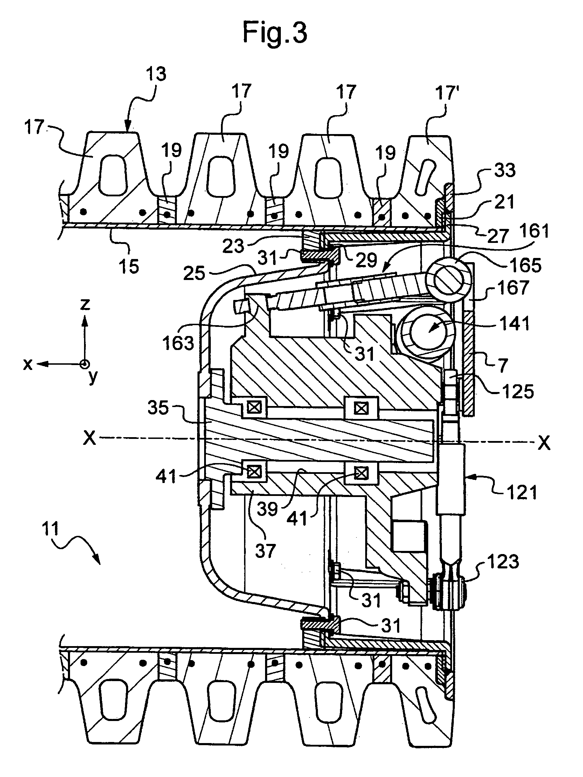

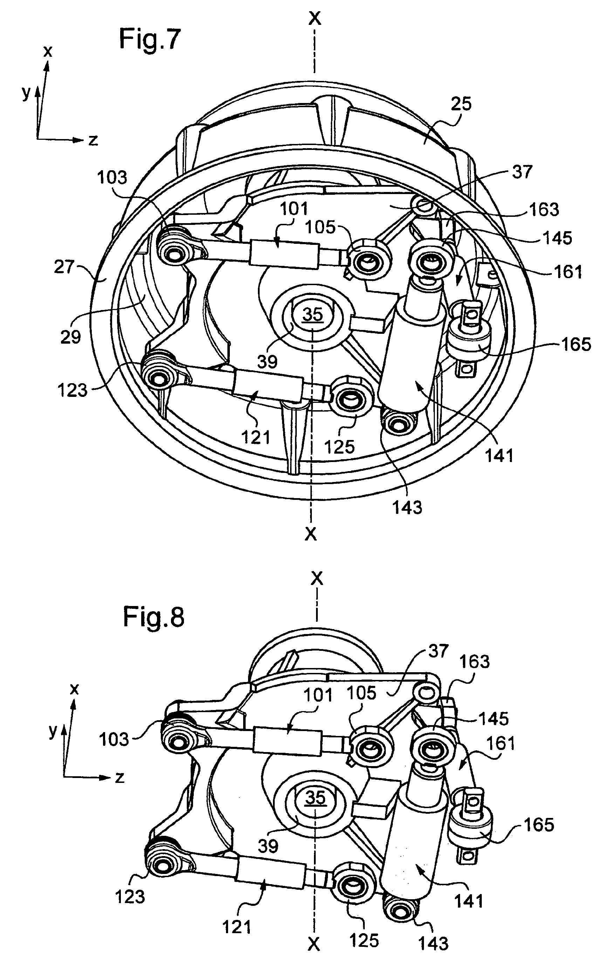

Dans la suite on décrit plus précisément l'ensemble droit représenté sur les figures 3 à 8. Pour ne pas complexifier les figures et la description, les références ne sont pas agrémentées de "A" ou de "B" lorsque la distinction entre des parties gauche ou droite n'est pas nécessaire. De manière générale l'ensemble gauche est le symétrique de l'ensemble droit, cependant certaines variantes pourront être applicables à l'un des deux ensembles seulement ou aux deux.

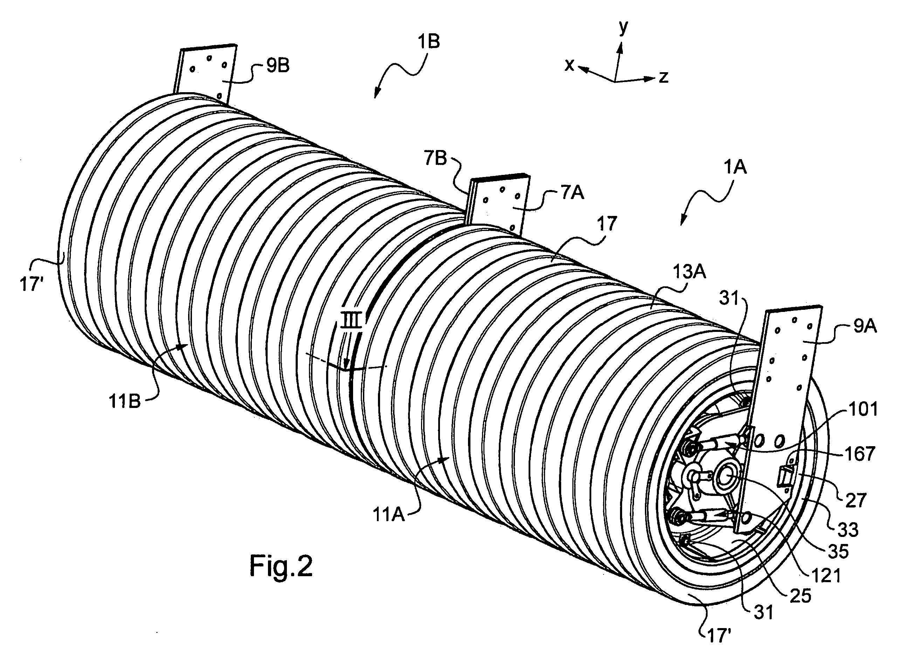

La barre 5 n'est pas représentée sur la figure 2. Les rouleaux 11A, 11B comprennent un tube 15, non visible sur la figure 2, autour duquel est arrangé un bandage souple 13A, respectivement 13B. Le tube 15 est cylindrique et de section circulaire. Il est avantageusement réalisé en acier.

La figure 3 représente une vue en coupe de dessus d'une extrémité de l'un des outils de modelage. La coupe de la figure 3 correspond ici à l'extrémité gauche de l'outil droit 1B, au niveau du support 7B. Comme on le voit mieux sur la figure 3, le bandage souple 13 monté sur le tube 15 est formé par une succession de pneumatiques 17, 19 montés autour du tube 15. Les pneumatiques 17, 19 sont enfilés de façon jointive, alternés les uns contre les autres et maintenus à chaque extrémité de l'empilement, par exemple au moyen d'une joue 21 d'extrémité solidaire du tube 15 assurant le serrage et le maintien de la série de pneumatiques 17, 19.

On peut prévoir aussi, en variante, que le tube 15 qui porte le bandage souple 13 ne recouvre pas la portion cylindrique de la joue d'extrémité et qu'une partie du bandage soit montée directement sur une portion de joue ayant le même diamètre extérieur que le tube.

Il est possible d'assembler les pneumatiques 17, 19 par leurs flancs respectifs formant des parties en contact. Des organes de poussée aux extrémités peuvent être utilisés pour réaliser l'assemblage.

Les divers pneumatiques 17, 19 de l'empilement peuvent être en outre solidarisés entre eux par des éléments d'assemblage appropriés (non représentés) par exemple ceux décrits dans la publication FR-A-2-784-331, au nom de la demanderesse, à laquelle on pourra se référer pour de plus amples détails. La joue d'extrémité 21 vient en appui contre le premier pneumatique 17' de l'empilement qui, du fait de sa fonction, peut présenter un profil légèrement différent des pneumatiques 17 du centre du rouleau 11, pour lui permettre de s'emboîter dans la joue 21. La joue 21 est elle-même solidarisée au tube 15. De cette manière, l'empilement des pneumatiques 17, 19 et le tube 15 forment un ensemble solidaire constituant un rouleau 11 susceptible d'être monté à rotation par rapport au châssis 3 par l'intermédiaire d'un ensemble d'organes que l'on décrira par la suite.

Les pneumatiques 17 représentés sur les figures 2 et 3 sont de type semi-creux, et sont décrits dans la demande de brevet français n° FR 2 913 915. Dans l'exemple des figures 2 et 3, les pneumatiques 17 présentent un profil en dôme semi-creux. Le profil semi-creux comprend deux flancs reliés à un fourreau. Le fourreau est disposé sensiblement parallèlement à la paroi du tube 15. Les flancs du profil semi-creux s'étendent dans une direction opposée au tube 15. Les flancs sont mutuellement reliés par leurs extrémités opposées au tube 15. Les extrémités reliées des flancs forment le dôme. L'enveloppe extérieure du dôme forme une partie du bandage 13. L'enveloppe extérieure des flancs et du dôme forment, selon un plan comprenant le premier axe XX, des nervures circonférentielles du rouleau 11 intercalées entre des demi-sculptures formées par les pneumatiques 19. Le terme nervure désigne ici la portion mâle du profil de pneumatique 17, tandis que le terme sculpture désigne ici la partie femelle du profil de pneumatique 19.

Dans l'exemple décrit ici, le fourreau et les flancs délimitent un espace annulaire creux. Cette configuration confère aux pneumatiques 17 un caractère semi-creux, c'est-à-dire que l'espace annulaire creux n'est pas gonflé mais peut communiquer avec le milieu ambiant au moyen d'un trou (non représenté) traversant l'épaisseur du fourreau. Ce trou permet, outre l'équilibrage des pressions en utilisation, d'injecter de l'air sous pression lors de l'étape de vulcanisation en fabrication.

Il est en effet souhaitable que les pneumatiques 17 puissent se déformer quelque peu dans la région comprise entre le dôme et le fourreau pour faciliter le décollement de la terre qui, sinon, aurait tendance à adhérer aux pneumatiques dans la région des flancs. Cette déformation du pneumatique, qui lui procure une souplesse suffisante pour amortir les déformations et être autonettoyant, est cependant limitée par la forme en dôme, qui évite que le dôme ne s'affaisse de façon excessive.

Dans une variante, les pneumatiques 17 sont pleins, c'est-à-dire que l'espace annulaire creux est inexistant. D'autres types de bandage ou pneumatiques peuvent aussi être utilisés.

Dans l'exemple décrit ici, le fourreau est renforcé mécaniquement par des joncs métalliques noyés dans la matière du pneumatique 17, 19, en particulier pour assurer un meilleur maintien sur le tube 15 en dépit des sollicitations mécaniques reçues par les pneumatiques 17, 19 qui peuvent être assez intenses et brutales. En variante, le pneumatique 41 ne comprend aucun jonc métallique.

Le rouleau 11 comprend en outre un anneau 23 fixé solidairement à la surface intérieure du tube 15 à proximité de chacune des extrémités axiales du tube 15. L'anneau 23 forme un épaulement intérieur du tube 15.

Le rouleau 11 comprend en outre, à chacune de ses extrémités, un flasque 25 fermant partiellement chacune des extrémités du tube 15. Le flasque 25 présente une forme générale de coupole. Le flasque 25 comprend, sur sa circonférence (à droite sur la figure 3), un rebord annulaire 27 s'étendant radialement vers l'extérieur et agencé pour venir s'appuyer contre le bord libre du tube 15. Le flasque 25 comprend, solidaire du rebord 27, une portion sensiblement cylindrique dimensionnée pour s'insérer contre la surface intérieure d'extrémité du tube 15. La portion cylindrique est délimitée axialement par un épaulement 29 formant un décrochement orienté radialement vers l'intérieur du tube 15 et agencé pour venir s'appuyer contre l'anneau 23 du tube 15. Le flasque 25 comprend un fond arrondi de diamètre extérieur inférieur au diamètre intérieur de l'anneau 23 et s'étendant axialement au-delà de l'anneau 23 vers le milieu du tube 15. Le fond du flasque 25 est, dans l'exemple décrit ici, percé d'une ouverture sensiblement circulaire centrée sur l'axe XX.

Ainsi, lors du montage, le flasque 25 peut être inséré selon la direction XX du tube 15 de l'extérieur vers l'intérieur du tube 15, de sorte à être logé à l'intérieur du tube 15, à l'exception du rebord annulaire 27 venant en appui contre la circonférence extérieure du tube 15. Le flasque 25 est solidarisé avec le tube 15, ici au moyen de vis 31 traversant l'épaulement 29 et l'anneau 23 de manière répartie sur la circonférence. Un tel assemblage est démontable. En variante, le flasque 25 pourrait être fixé au tube 15 par soudage, frettage, etc. À l'état monté, le rebord 27 du flasque 25 vient s'appuyer partiellement contre la joue 21.

Le flasque 25, à l'état fixé dans le tube 15, définit un espace ouvert orienté vers l'extérieur du tube 15. L'espace ouvert forme un logement pour le palier et les éléments de suspension décrits dans la suite.

Comme cela est visible sur la figure 3, un anneau 33 est disposé diamétralement autour du rebord 27, de sorte à former une surface radiale sensiblement continue entre l'extérieur du pneumatique 17' et le rebord 27. Un tel agencement permet de limiter l'accumulation de débris en utilisation.

En variante l'anneau 23 peut être remplacé par des blocs espacés, par exemple des blocs en acier en forme de parallélépipède, taraudés et soudés à l'intérieur du tube 15.

Il est envisageable aussi de supprimer le contact d'épaulement entre le tube 15 et le rebord 27 du flasque et de remplacer l'anneau 23 par trois blocs rigides espacés angulairement à 120° en intercalant, entre ces blocs, des éléments de fixation supplémentaires réalisés rigides dans leur disposition dans le plan yz mais déformables selon la direction x. On garantit ainsi un contact étroit entre le flasque, qui est très rigide, et les blocs et éléments de fixation supplémentaires. Ceci permet à l'interface flasque/tube de transmettre les efforts, en particulier les efforts de freinage dans le cas où le rouleau suspendu est freiné.

D'autres types de fixation entre le flasque et le tube sont envisageables.

Le rouleau 11 comprend en outre un demi-arbre 35. Dans l'exemple décrit ici, le demi-arbre 35 est fixé solidairement au flasque 25 de sorte que son axe de symétrie est sensiblement confondu avec l'axe XX de rotation du reste du rouleau 11. Le demi-arbre 35 est dimensionné de sorte à être logé à l'intérieur du flasque 25 et du tube 15. Autrement dit, l'extrémité axiale du côté extérieur (à droite sur la figure 3) du demi-arbre 35 est en retrait par rapport à l'extrémité du tube 15.

Les outils de modelage du sol 1 comprennent en outre un palier 37 logé dans l'espace ouvert du flasque 25 et autour du demi-arbre 35. Le palier 37 est une pièce massive présentant une forme complexe adaptée pour être le siège de la rotation du demi-arbre 35. Le palier 37 présente ici un orifice traversant 39. L'orifice 39 accueille une portion cylindrique du demi-arbre 35. Des gorges annulaires sont ménagées dans l'orifice 39 et logent des roulements à billes 41 facilitant la rotation du demi-arbre 35 dans l'orifice 39 du palier 37. L'alignement des deux demi-arbres 35 et des orifices 39 des deux paliers 37 supportant un même rouleau 11 définissent l'axe XX de rotation du rouleau 11 par rapport aux paliers 39.

Le palier 37 peut en outre former un boîtier logeant au moins un moyen de freinage apte à exercer de manière commandée un couple résistant entre le palier et le rouleau 11, comme décrit plus loin.

Le palier 37 est relié au support 7 par l'intermédiaire de moyens de suspension. Le palier 37 a donc au moins un degré de liberté par rapport au support 7. Les moyens de suspension vont maintenant être décrits en référence aux figures 3, 4, 5 et 6 simultanément qui permettent de mieux appréhender l'organisation tridimensionnelle d'un mode de réalisation de l'invention.

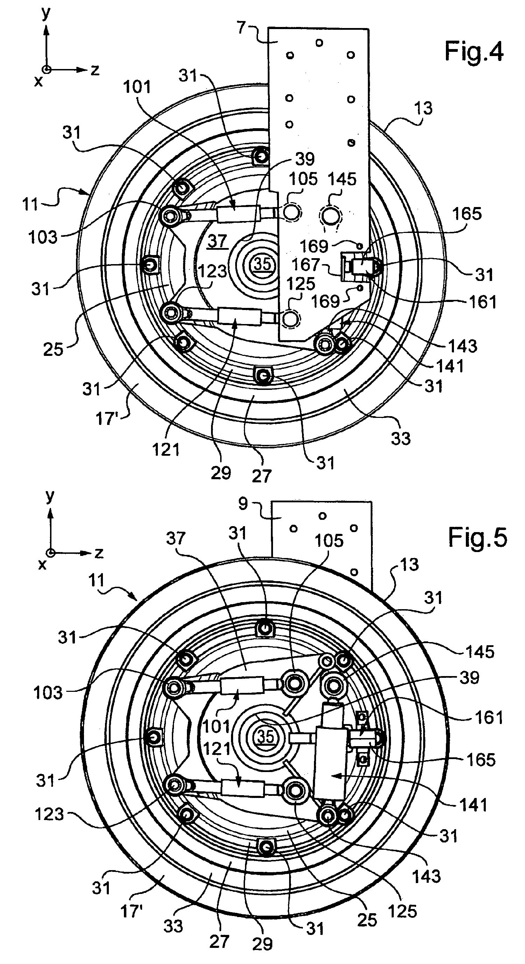

La figure 4 représente une vue depuis le côté gauche de la machine et qui correspond à l'outil droit 1B, l'outil gauche 1A n'ayant pas été représenté.

La figure 5 est identique à la figure 4 à l'exception du support 7 qui n'a pas été représenté.

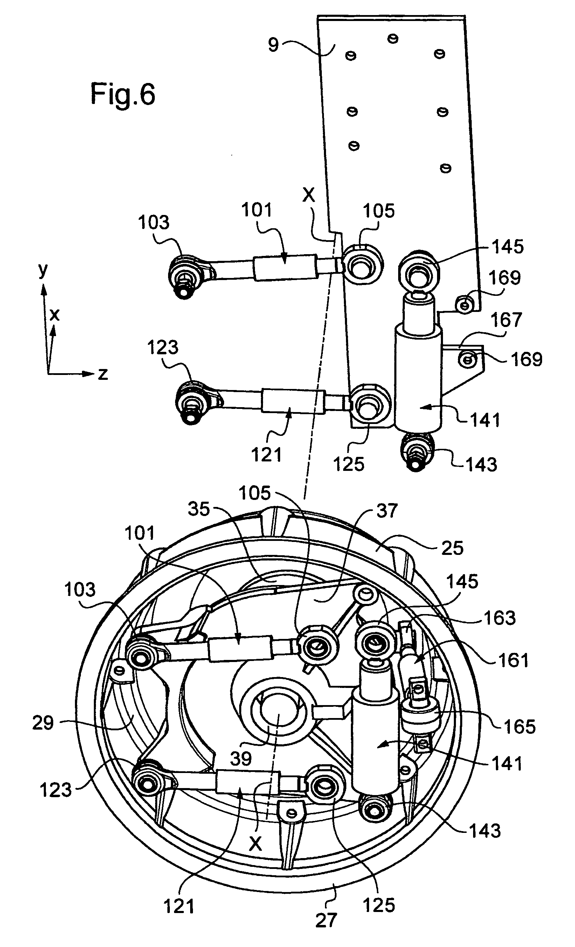

La figure 6 est une représentation en perspective de l'outil droit 1B dans lequel le palier droit 37 et le rouleau 11 ne sont pas représentés à l'exception du flasque 25 gauche.

Les moyens de suspension forment ici un mécanisme comprenant un bras supérieur 101 ou bielle supérieure, un bras inférieur 121 ou bielle inférieure, un organe de rappel élastique 141 et un bras supplémentaire 161.

Dans l'exemple décrit ici, le bras supérieur 101 et le bras inférieur 121 sont sensiblement similaires. Le bras supérieur 101, respectivement le bras inférieur 121, comprend une première extrémité 103, respectivement 123, et une seconde extrémité 105, respectivement 125.

Dans l'exemple décrit ici, les moyens de suspension comprennent en outre un organe de rappel élastique 141. L'organe de rappel élastique 141 est, ici, un vérin pneumatique ou hydraulique. Le vérin 141 comprend une première extrémité 143, ici solidaire du cylindre. D'autre part, le vérin 141 comprend une seconde extrémité 145, ici solidaire du piston. Il est envisageable aussi, en variante, de prévoir que le piston du vérin soit orienté vers le bas et que le cylindre du vérin soit orienté vers le haut.

L'une au moins des extrémités d'un rouleau 11, ici seulement l'extrémité située du côté du support intérieur 7, est munie d'un bras supplémentaire 161 appartenant aux moyens de suspension. Le bras supplémentaire 161 comprend une première extrémité 163 et une seconde extrémité 165.

Dans l'exemple décrit ici, le palier 37 comprend quatre chevilles en saillie vers l'extérieur (côté gauche) du palier 37 et orientées selon une direction sensiblement parallèle à l'axe XX. Chacune des premières extrémités 103, 123, 143 et 163 comprend un orifice traversant agencé pour loger l'une des chevilles du palier 37.

Les premières extrémités 103, 123, 143 et 163 sont fixées au palier 37 libre en rotation selon un axe sensiblement parallèle à l'axe XX par l'intermédiaire des chevilles du palier 37.

De manière similaire, le support 7 comprend quatre chevilles faisant saillie vers l'intérieur du rouleau 11 (côté droit) et orientées selon une direction sensiblement parallèle à l'axe XX. Chacune des secondes extrémités 105, 125, 145 et 165 comprend un orifice traversant agencé pour loger l'une des chevilles du support 7.

Les secondes extrémités 105, 125, 145 et 165 sont fixées au support 7 libre en rotation selon un axe sensiblement parallèle à l'axe XX par l'intermédiaire des chevilles du support 7.

L'agencement mutuel du bras supérieur 101 et du bras inférieur 121, ainsi que de leurs fixations au support 7 et au palier 37, est choisi de sorte que le bras supérieur 101 et le bras inférieur 121 soient disposés sensiblement dans un plan perpendiculaire à l'axe XX, c'est-à-dire sensiblement parallèle au plan principal du support 7.

Dans une position au repos, c'est-à-dire lorsque le rouleau 11 est posé au sol à l'arrêt, chacun des bras supérieurs 101 et des bras inférieurs 121 forment un angle inférieur à 20° par rapport à la direction horizontale z. Cet angle peut être nul, positif ou négatif. Le bras supérieur 101 et le bras inférieur 121 sont sensiblement coplanaires. Les directions principales du bras supérieur 101 et du bras inférieur 121 forment un angle inférieur à 40°.

Dans l'exemple décrit ici, au repos, la combinaison du bras supérieur 101 et du bras inférieur 121 permet le mouvement du palier 37 par rapport au support 7 selon un plan sensiblement perpendiculaire à l'axe XX. Le bras supérieur 101, le bras inférieur 121, le segment reliant la première extrémité 103 du bras supérieur 101 et la première extrémité 123 du bras inférieur 121 ainsi que le segment reliant la seconde extrémité 105 du bras supérieur 101 et la seconde extrémité 125 du bras inférieur 121 forment un quadrilatère déformable. Ce quadrilatère peut être par exemple un parallélogramme, un trapèze ou même un losange. La distance entre les premières extrémités 103, 123 d'une part et la distance entre les secondes extrémités 105, 125 d'autre part étant constantes, et les longueurs des bras supérieur 101 et inférieur 121 étant constantes, le mouvement du sous-ensemble comprenant le support 7, le bras supérieur 101, le bras inférieur 121 et le palier 37 sont mutuellement mobiles selon un mouvement rappelant celui d'un pantographe.

Dans l'exemple décrit ici, les premières extrémités 103, 123 sont comprises dans une direction verticale y commune. De même, les secondes extrémités 105, 125 sont comprises dans une direction verticale y commune. Une telle combinaison permet d'autoriser un mouvement vertical (direction y) du palier 37 par rapport au support 7 d'une amplitude importante par rapport à l'amplitude du mouvement horizontal (direction z) autorisée. Autrement dit, en fonctionnement, la machine de modelage du sol est tractée de la droite vers la gauche sur les figures 4 à 6. Ce mouvement est transmis au bras supérieur 101 et inférieur 121 et plus particulièrement par l'intermédiaire des chevilles du support 7 et des secondes extrémités 105 et 125. En réaction, le bras supérieur 101 et le bras inférieur 121 transmettent le mouvement horizontal en tractant le palier 37, plus précisément par l'intermédiaire des premières extrémités 103 et 123. Les mouvements verticaux (direction y) du rouleau 11 au contact du sol se traduisent par la mise en rotation des liaisons 103, 105, 123, 125. La transmission du déplacement vertical du rouleau vers le châssis 3 est alors limitée. Le rouleau 11 est suspendu.

En variante, les liaisons 103, 105, 123, 125 peuvent être des liaisons rotules. Outre les déplacements dans le plan perpendiculaire à l'axe XX, le palier 37 et le support 7 peuvent avoir un déplacement relatif selon une direction sensiblement parallèle à l'axe XX (la direction x). Ceci permet de limiter la transmission des mouvements du rouleau 11 au châssis 3 selon la direction x et de limiter les contraintes subies par le mécanisme.

Le vérin 141 est agencé selon une direction sensiblement verticale (direction y). Les chevilles du support 7 d'une part et du palier 37 d'autre part sont sensiblement alignées selon une direction verticale (la direction y) au repos. La course du piston du vérin 141 est choisie pour limiter le déplacement relatif vertical entre le support 7 et le palier 37. D'autre part, le vérin 141 rappelle le palier 37 en une position verticale de repos. En fonctionnement comme au repos, le montage à rotation des deux extrémités 143, 145 du vérin 141 permet une inclinaison du vérin 141 par rapport à la verticale, en particulier lorsque l'activation des bras supérieur 101 et inférieur 121 et du déplacement horizontal selon la direction x du palier 37 par rapport au support 7.

Dans l'exemple décrit ici, le vérin 141 est aussi un moyen d'amortissement. Autrement dit, en fonctionnement, le vérin 141 permet de freiner le mouvement vertical entre le support 7 et le palier 37 et vice-versa. Le moyen de rappel élastique et l'organe amortisseur sont confondus.

En variante, le moyen de rappel élastique et l'organe amortisseur sont deux pièces distinctes. Par exemple l'organe amortisseur peut comprendre un bras amortisseur et le moyen de rappel élastique peut comprendre un ressort hélicoïdal, les deux pièces étant concentriques ou non.

Les moyens de suspension peuvent être présents sur un côté seulement du rouleau ou des deux côtés. Le mécanisme de quadrilatère déformable ainsi que l'organe de rappel élastique peuvent être présents sur chacun des côtés d'un outil de modelage tandis que seul un des deux côtés est muni d'un bras supplémentaire 161.

Dans une autre variante, le vérin peut être contrôlé de manière à adapter les forces de réaction. Autrement dit, l'amortissement est adaptable. Par exemple, la course du vérin peut être bloquée ou rendue négligeable dans une position de travail en champ, tandis qu'elle est maximale en position de transport sur route. Ceci permet un comportement suspendu et éventuellement amorti sur route tandis qu'en position de travail du sol, le poids de la machine est utilisé pour appuyer ou réappuyer le sol et permet une meilleure homogénéité de la force appliquée au sol au cours de la progression de la machine.

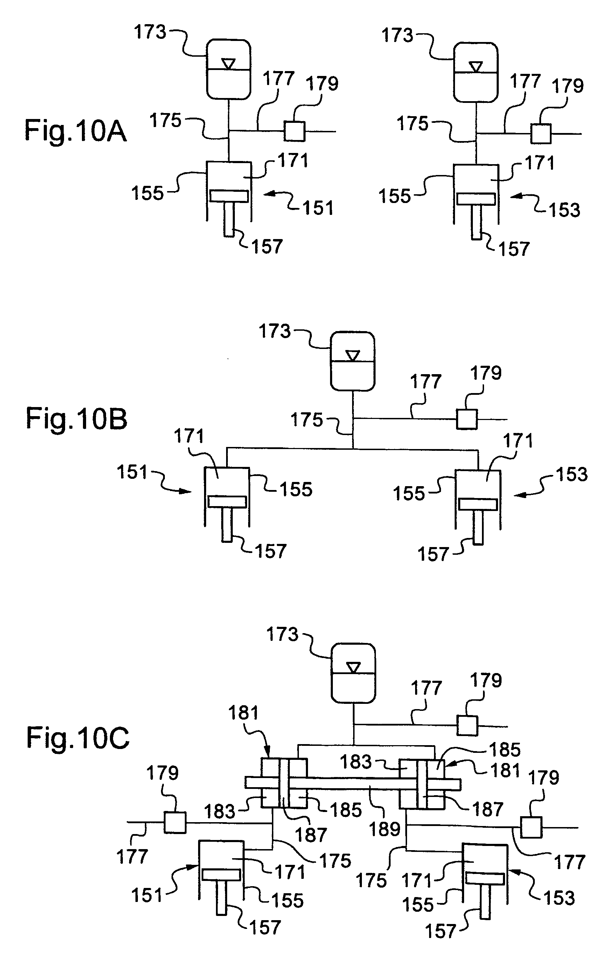

Les figures 10A, 10B et 10C représentent trois modes de réalisation d'organes amortisseurs de type vérins hydrauliques contrôlés. Deux vérins 151, 153 à simple effet sont pilotés de manière indépendante ou découplée. Les vérins comprennent chacun un cylindre 155 logeant une tête de piston 157. Chaque vérin 151, 153 définit une chambre 171, respectivement 173, dont le volume dépend de la position de la tête de piston 157 dans le cylindre 155. Le cylindre 155 est ici fixé au châssis 3 non représenté et l'extrémité du piston 157 opposée à la tête est fixée au palier 37 non représenté. Plus précisément, le cylindre 155 du vérin 151 est fixé au support 7 agencé d'un côté de l'outil tandis que le cylindre 155 du vérin 153 est fixé au support 9 du côté opposé de l'outil.

Dans le mode de réalisation de la figure 10A, chacune des chambres 171 des vérins 151, 153 est reliée fluidiquement à un accumulateur hydropneumatique 173 par l'intermédiaire d'une conduite 175. Chaque chambre 171 et chaque conduite 175 est rempli de fluide incompressible, ici de l'huile. Chaque accumulateur hydropneumatique 173 est rempli en partie basse par l'huile et en partie haute par un gaz compressible, par exemple de l'azote. Il s'agit alors d'un accumulateur hydropneumatique. Chaque conduite 175 est alimentée en huile par l'intermédiaire d'une conduite d'alimentation 177 sur laquelle est montée une vanne contrôlable 179. En statique, un contrôle de l'alimentation en huile permet de choisir le volume de la chambre 171 et donc la position au repos de chaque vérin 151, 153, indépendamment l'un de l'autre. En dynamique, c'est-à-dire lorsque la machine est en mouvement, le mouvement du piston 157 est amorti par la compression/dépression du volume de gaz compressible dans l'accumulateur hydropneumatique 173 de manière connue en soit. Les deux vérins 151, 153 sont indépendants l'un de l'autre. Ceci permet d'assurer un comportement de l'outil en mouvement sensiblement découplé d'un côté et de l'autre.

Dans le mode de réalisation de la figure 10B, le montage ressemble à celui de la figure 10A et les éléments communs sont référencés de manière identique. Ici, chacun des vérins 151, 153 est relié fluidiquement à un accumulateur hydropneumatique 173 commun par l'intermédiaire d'une conduite 175 se séparant en deux branches alimentant chacune des chambres 171. Dans ce mode de réalisation, les deux chambres 171 sont donc en communication fluidique. Autrement dit, la somme des volumes des deux chambres 171 est constante en fonctionnement statique. L'expression « fonctionnement statique » est utilisée ici pour caractériser une situation où il n'y a pas d'accélération verticale, ni de variation de la masse de la machine. Les forces dans les deux vérins sont proportionnelles selon le rapport des sections hydrauliques des vérins. Le mouvement des deux pistons 157 est donc inversé : lorsque l'un monte, l'autre descend et vice versa. Ceci confère un comportement de l'outil rappelant celui d'un balancier suspendu au point d'articulation, celui-ci se trouvant dans la position qui divise sa longueur totale en deux parties inversement proportionnelles aux surfaces des vérins.

Dans le mode de réalisation de la figure 10C, le montage ressemble à celui de la figure 10B et les éléments communs sont référencés de manière identique. Ici, un logement auxiliaire 181 est interposé sur chacune des branches alimentant les deux chambres 171 de chacun des vérins 151, 153. Chaque logement auxiliaire 181 est divisé en deux chambres 183, 185 par une paroi mobile étanche 187 formant un vérin double effet. Les parois mobiles 187 sont couplées entre elles de sorte que le mouvement de l'une entraine le mouvement de l'autre dans le même sens. Ce couplage est ici réalisé au moyen d'une tige 189 solidaire de chacune des parois mobiles 187. Par même sens on entend ici que le mouvement d'une des parois 187 dans un sens déplaçant l'huile de la chambre 171 vers l'accumulateur hydropneumatique 173 pour le vérin 151 entraine un déplacement de l'huile dans le même sens pour le vérin 175. Les volumes des deux chambres 171 sont donc proportionnels en fonctionnement statique. Ici, l'expression « fonctionnement statique » fait référence à une situation où, toujours en l'absence d'accélération verticale, la masse de la machine vraisemblablement varie. Autrement dit les pistons à double effet formés par les logements auxiliaires 181 et les parois mobiles 187 sont asservies l'un à l'autre de sorte que leurs courses soient proportionnelles Le mouvement des deux pistons 157 est couplé : lorsque l'un monte, l'autre monte également et vice versa. Ceci confère un comportement de l'outil sensiblement identique de chaque côté. Les deux vérins sont obligés d'effectuer des déplacements dans le même sens, inversement proportionnels aux sections respectives.

Dans les exemples des figures 10B et 10C, les deux vérins 151, 153 sont identiques notamment en dimension ce qui permet une course identique de chacun des pistons 157 au sens près. En variante, le volume des chambres 171 peut être choisi différent de sorte à choisir un effet démultiplicateur du mouvement entre l'un et l'autre des vérins 151, 153.

Les liaisons 143, 145 sont, en variante, des liaisons rotules. Cette variante est particulièrement adaptée à la variante précédemment décrite où les liaisons 103, 105, 123, 125 des bras supérieur 101 et inférieur 121 sont des rotules. Outre les déplacements dans le plan perpendiculaire à l'axe XX, le palier 37 et le support 7 peuvent avoir un déplacement relatif selon une direction sensiblement parallèle à l'axe XX (la direction x). Ceci permet de limiter la transmission des mouvements du rouleau 11 au châssis 3 selon la direction x. Les liaisons rotules limitent l'application de contraintes aux liaisons entre le bras supérieur 101/le bras inférieur 121/le moyen de rappel élastique 141 et le support 7/le palier 37.

Le bras supplémentaire 161 est disposé sensiblement parallèle à l'axe XX en position de repos. Les articulations de la première extrémité 163 et de la seconde extrémité 165 sont de préférence des liaisons rotules avec le palier 37 d'une part et avec le support 7 d'autre part. En fonctionnement, le bras supplémentaire 161 transmet les mouvements relatifs entre le rouleau 11 et le châssis 3 selon une direction horizontale sensiblement parallèle à l'axe XX. Le bras supplémentaire 161, tout comme le bras supérieur 101 et le bras inférieur 121, travaille donc essentiellement en traction ou compression selon sa direction longitudinale. Ainsi, les contraintes mécaniques résultant des mouvements selon la direction x, latérale, entre le rouleau 11 et le châssis 3 sont subies préférentiellement par le bras supplémentaire 161, plutôt que par les articulations 103, 105, 123, 125 du bras supérieur 101 et du bras inférieur 121. Ceci limite le travail en flexion du bras supérieur 101 et du bras inférieur 121 à leurs extrémités respectives. D'autre part, un écart entre le support 7 et le rouleau 11 est maintenu, ce qui évite le frottement du flanc du rouleau 11 contre le support 7 et facilite donc le roulement. Le bras supplémentaire 161 facilite le maintien de cet écart.

Pour un outil de modelage 1A, 1B, un bras supplémentaire 161 peut être prévu seulement du côté gauche, seulement du côté droit, sur chacun des deux côtés ou ni sur l'un, ni sur l'autre. Dans le cas d'absence de bras supplémentaire 161, la variante où les extrémités des bras supérieur 101 et inférieur 121 et/ou du moyen de rappel élastique 141 forment des liaisons rotules avec le support 7/le palier 37 est mieux adaptée pour éviter des concentrations de contraintes au niveau des liaisons. Autrement dit, les rotules permettent un degré de liberté supplémentaire du rouleau 11 par rapport au châssis 3 selon la direction x.

En position de repos, telle que représentée en figure 4, les deux supports 7 et 9 sont désaxés par rapport à l'axe XX de rotation du rouleau 11. Les premières articulations 103, 123 des bras supérieurs 101 et inférieurs 121 sont disposées dans une partie avant du palier 37, à gauche sur la figure 4. Cet agencement permet d'éloigner la première extrémité 103, respectivement 123, de la seconde extrémité 105, respectivement 125, selon la direction z. Autrement dit, la longueur du bras supérieur 101, respectivement du bras inférieur 121, est substantielle. Plus le bras supérieur 101, respectivement le bras inférieur 121 est long, plus l'amplitude autorisée des déplacements relatifs entre le rouleau 11 et le châssis 3 sont importants. La longueur des bras supérieurs 101 et inférieurs 121 est néanmoins limitée par l'encombrement du dispositif. Autrement dit, les moyens de suspension sont ici logés en majorité dans l'enveloppe du rouleau 11. Ceci permet d'agencer les supports 7, 9 au plus près des rouleaux 11 sans pour autant être en contact. Ainsi, plusieurs outils 1 peuvent être juxtaposés, comme représenté sur les figures 1 et 2.

L'écartement entre les deux bandes de roulement 13A et 13B est ainsi supérieur à l'épaisseur des deux supports 7A et 7B L'absence de bandage souple à l'interface des deux rouleaux 11A, 11B juxtaposés est ainsi limitée. En particulier, un pas de répétition selon la direction y d'un motif élémentaire du bandage souple 13, par exemple ici les profils en dôme, peut être préservé à l'interface de deux rouleaux 11.

En variante, plus de deux outils sont ainsi juxtaposés. Par exemple, des machines de modelage du sol peuvent comprendre deux rouleaux centraux similaires à ceux des figures 1 et 2 tandis que des rouleaux latéraux supplémentaires sont juxtaposés et alignés en position de travail et en position rétractée ou relevés en position de transport. Ceci permet d'adapter la largeur de la machine en fonction de l'utilisation.

Dans les modes de réalisation décrits jusqu'ici, la machine de modelage du sol est prévue pour être tractée selon un sens de déplacement (de la droite vers la gauche sur les figures 2 et 4 à 8) dans lequel les supports 7 et 9 sont désaxés vers l'arrière par rapport à l'axe XX de rotation des rouleaux 11. Cependant, un déplacement de la machine selon un sens inversé, c'est-à-dire de la gauche vers la droite est également possible.

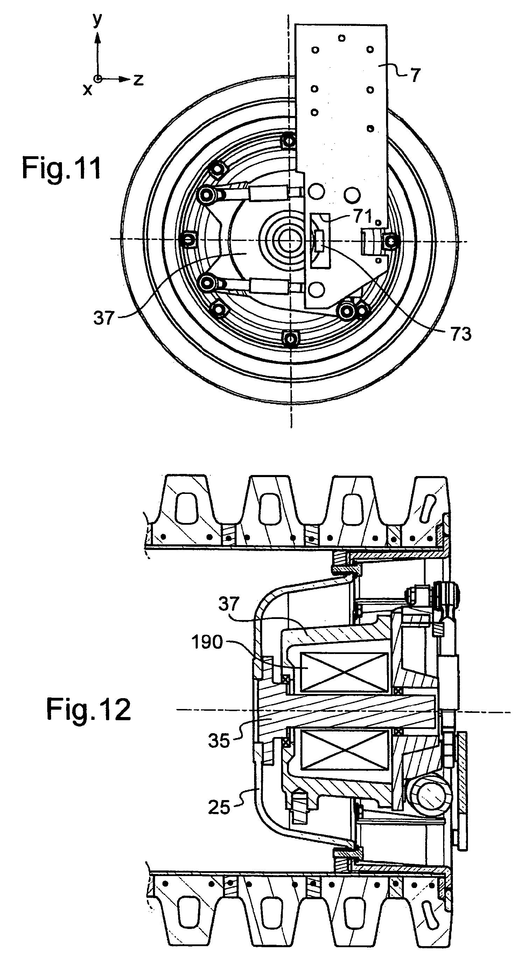

La figure 11 montre un mode de réalisation comprenant un système de butée limitant le déplacement vertical relatif entre le palier 37 et le support 7. Le support 7 comprend un logement 71 et le palier 39 comprend un ergot 73. En variante, le support 7 comprend un ergot et le palier 39 comprend un logement. L'ergot 73 et le logement 71 sont mutuellement agencés pour coopérer en butée. Le logement 71 comprend ici une fente sensiblement verticale (selon la direction y). L'ergot 73 et le logement 71 limitent l'amplitude des déplacements du palier 37 par rapport au châssis 3. Ils forment un système de butée ou de limitation de l'amplitude du mouvement vertical autorisé entre le palier 37 et le support 7 par l'ensemble comprenant le bras supérieur 101 et le bras inférieur 121. L'ergot 73 et le logement 71 peuvent être mutuellement agencés selon une direction sensiblement parallèle à la direction d'avancement (direction z) pour former un système de butée ou de limitation de l'amplitude du mouvement horizontal autorisé entre le palier 37 et le support 7 par l'ensemble comprenant le bras supérieur 101 et le bras inférieur 121. L'ergot 73 et le logement 71 peuvent être mutuellement agencés pour former un système combiné de butée ou de limitation de l'amplitude du mouvement à la fois horizontal (direction z) et vertical (direction y) autorisé entre le palier 37 et le support 7 par l'ensemble comprenant le bras supérieur 101 et le bras inférieur 121.

La machine présente une position de transport et une position de travail. Elle comprend un moyen de neutralisation des moyens de suspension de sorte à bloquer les mouvements des paliers 37 par rapport au châssis 3. Le moyen de neutralisation est activable notamment en position de travail. Dans une combinaison de variante comprenant des vérins pilotés et le système de butée, les vérins pilotés peuvent forcer l'ergot 73 à rester en butée dans une position extrême dans le logement 71. Ainsi, la machine comprend un moyen de neutralisation des moyens de suspension de sortes à bloquer les mouvements des paliers 37 par rapport au châssis 3. Le moyen de neutralisation est activable notamment en position de travail.

La figure 12 montre comment le palier 37 forme un boîtier logeant au moins un moyen de freinage 190 (représenté schématiquement) disposé dans l'espace annulaire délimité entre le palier 37 et le demi-arbre 35. Ce moyen de freinage 190 peut être notamment du type frein à tambour ou frein à disque. Il permet d'exercer de manière commandée un couple résistant entre le palier 37 et le rouleau 11.

L'invention ne se limite pas aux modes de réalisations décrits en détail et aux quelques variantes décrites. Notamment, bien que les modes de réalisations décrits concernent plus spécifiquement des machines agricoles, l'invention est adaptable à tous type de machine de modelage du sol munie de rouleaux. Par exemple, la machine peut être un engin de travaux public et/ou de réfection de voirie. De telles machines sont munies de rouleau(x) pour aplanir ou niveler le sol. L'invention permet à ces machines d'avoir un comportement plus souple lors du roulage. Les irrégularités du sol sont partiellement absorbées ce qui limite les contraintes et les chocs subis par les machines.

Ce type de système permet d'améliorer le comportement de la machine aussi bien sur route qu'en champ ou en travail en s'adaptant aux irrégularités du terrain pratiqué.

## Revendications

1. Machine de modelage du sol, en particulier machine agricole, comprenant un châssis (3),
au moins un rouleau (11) muni d'un bandage souple (13),
un premier palier (37) et un second palier (37) de rotation du rouleau (11) autour d'un axe (XX) sensiblement horizontal en position de travail, le premier palier (37) et le second palier (37) étant disposés à chacune des extrémités du rouleau (11), le châssis (3) comportant un premier support (7) et un second support (9), le premier support (7) au moins étant relié au premier palier (37) par l'intermédiaire de moyens de suspension, le second support (9) étant relié au second palier (37), **caractérisée en ce que** les moyens de suspension incluent
un mécanisme à un bras supérieur (101) et un bras inférieur (121) sensiblement horizontaux et perpendiculaires à l'axe (XX) de rotation du rouleau (11), chacun des bras supérieur (101) et inférieur (121) étant relié par une articulation (103, 105, 123, 125) d'une part au premier support (7) et d'autre part au premier palier (37), le mécanisme formant un quadrilatère déformable, et
un organe de rappel élastique (141) sensiblement vertical relié par une articulation (143,145) d'une part au premier support (7) et d'autre part au premier palier (37).

2. Machine selon la revendication 1, dans laquelle les moyens de suspension comprennent en outre un bras supplémentaire (161) relié par une articulation (163, 165) d'une part au premier support (7) ou au second support (9) et d'autre part au premier palier (37), respectivement au second palier (37) selon une direction sensiblement parallèle à l'axe (XX) de rotation du rouleau (11).

3. Machine selon l'une des revendications précédentes, comprenant en outre un organe amortisseur sensiblement vertical relié d'une part au premier support (7) et d'autre part au premier palier (37).

4. Machine selon la revendication 3, dans laquelle l'organe de rappel élastique (141) et l'organe amortisseur sont confondus.

5. Machine selon l'une des revendications précédentes, dans laquelle les articulations (103, 105, 123, 125) des bras supérieur (101) et inférieur (121) sont de type rotule.

6. Machine selon l'une des revendications précédentes, dans laquelle le rouleau (11) comprend un tube (15) supportant le bandage souple (13), les moyens de suspension étant logés, dans une position au repos, sensiblement dans le tube (15).

7. Machine selon l'une des revendications précédentes, dans laquelle le rouleau (11) comprend un tube (15) supportant le bandage souple (13), le tube (15) étant au moins partiellement fermé à l'une au moins de ses extrémité par un flasque (25) en forme de coupole et dont l'espace ouvert orienté vers l'extérieur du tube (15) forme logement pour le premier palier (37) et les moyens de suspension.

8. Machine selon l'une des revendications précédentes, dans laquelle le premier support (7) et le second support (9) sont des plaques sensiblement planes.

9. Machine selon l'une des revendications précédentes, dans laquelle le premier support (7) comprend un ergot (73) et le premier palier (37) comprend un logement (71) ou inversement, l'ergot (73) et le logement (71) étant mutuellement agencés pour coopérer en butée et limiter l'amplitude des déplacements du premier palier (37) par rapport au châssis (3).

10. Machine selon l'une des revendications précédentes, dans laquelle le second support (9) est relié au second palier (37) par l'intermédiaire de moyens de suspension supplémentaires.

11. Machine selon la revendication 10, dans laquelle les moyens de suspension supplémentaires sont conformes aux moyens de suspension selon l'une des revendications précédentes.

12. Machine comprenant deux ensembles, chacun des ensembles étant formé d'une machine selon l'une des revendications précédentes, les châssis (3) étant communs et spéculaires selon un plan sensiblement vertical.

13. Machine selon l'une des revendications précédentes, dans laquelle l'un au moins des paliers (37) forme un boîtier logeant au moins un moyen de freinage (190) apte à exercer de manière commandée un couple résistant entre ledit palier (37) et le rouleau (11).

14. Machine selon l'une des revendications précédentes, présentant une position de transport et une position de travail et comprenant un moyen de neutralisation des moyens de suspension de sorte à bloquer les mouvements des paliers (37) par rapport au châssis (3), le moyen de neutralisation étant activable en position de travail.

15. Machine selon l'une des revendications 11 à 14, comprenant au moins deux organes amortisseurs (151, 153) reliés d'une part au premier support (7) et d'autre part au premier palier (37), respectivement d'une part au second support (9) et d'autre part au second palier (37), chacun des organes amortisseurs (151, 153) comprenant un vérin hydraulique relié à un accumulateur hydropneumatique (173) respectif indépendant l'un de l'autre.

16. Machine selon l'une des revendications 11 à 14, comprenant au moins deux organes amortisseurs (151, 153) reliés d'une part au premier support (7) et d'autre part au premier palier (37), respectivement d'une part au second support (9) et d'autre part au second palier (37), chacun des organes amortisseurs (151, 153) comprenant un vérin hydraulique dont une chambre (171) respective est reliée à un accumulateur hydropneumatique (173) commun.

17. Machine selon la revendication 16, dans laquelle chacun des organes amortisseurs (151, 153) est relié à l'accumulateur (173) commun par l'intermédiaire d'un piston double effet, les pistons double effet étant asservies l'un à l'autre de sorte que leurs courses soient proportionnelles.

## Patentansprüche

1. Bodenformungsmaschine, insbesondere landwirtschaftliche Maschine, umfassend:
ein Gestell (3),
mindestens eine Walze (11), die mit einem weichen Band (13) versehen ist,
ein erstes Lager (37) und ein zweites Lager (37) für die Rotation der Walze (11) um eine Achse (XX), die in der Arbeitsposition etwa horizontal verläuft, wobei das erste Lager (37) und das zweite Lager (37) an jedem der Enden der Walze (11) angeordnet sind,
wobei das Gestell (3) eine erste Stütze (7) und eine zweite Stütze (9) umfasst, wobei die erste Stütze (7) zumindest mit dem ersten Lager (37) unter Zwischenanordnung von Aufhängungsmitteln verbunden ist,
wobei die zweite Stütze (9) mit dem zweiten Lager (37) verbunden ist, **dadurch gekennzeichnet, dass** die Aufhängungsmittel umfassen:
einen Mechanismus mit einem oberen Arm (101) und einem unteren Arm (121), die etwa horizontal und senkrecht zu der Achse (XX) der Rotation der Walze (11) verlaufen, wobei jeder von oberem Arm (101) und unterem Arm (121) mit einem Gelenk (103, 105, 123, 125) einerseits an der ersten Stütze (7) und andererseits an dem ersten Lager (37) verbunden ist, wobei der Mechanismus ein verformbares Viereck bildet, und
ein etwa vertikales elastisches Rückstellorgan (141), das mit einem Gelenk (143, 145) einerseits an der ersten Stütze (7) und andererseits an dem ersten Lager (37) verbunden ist.

2. Maschine nach Anspruch 1, wobei die Aufhängungsmittel ferner einen Zusatzarm (161) umfassen, der mittels eines Gelenks (163, 165) einerseits an der ersten Stütze (7) oder an der zweiten Stütze (9) und andererseits an dem ersten Lager (37) bzw. an dem zweiten Lager (37) in einer Richtung verbunden ist, die etwa parallel zu der Achse (XX) der Rotation der Walze (11) verläuft.

3. Maschine nach einem der vorhergehenden Ansprüche, ferner umfassend ein Dämpfungsorgan, das etwa vertial einerseits mit der ersten Stütze (7) und andererseits mit dem ersten Lager (37) verbunden ist.

4. Maschine nach Anspruch 3, wobei das elastische Rückstellorgan (141) und das Dämpfungsorgan ineinander übergehen.

5. Maschine nach einem der vorhergehenden Ansprüche, wobei die Gelenke (103, 105, 123, 125) des oberen Arms (101) und des unteren Arms (121) vom Kugelgelenk-Typ sind.

6. Maschine nach einem der vorhergehenden Ansprüche, wobei die Walze (11) ein Rohr (15) umfasst, das das weiche Band (13) stützt, wobei die Aufhängungsmittel in einer Ruheposition etwa in dem Rohr (15) aufgenommen sind.

7. Maschine nach einem der vorhergehenden Ansprüche, wobei die Walze (11) ein Rohr (15) umfasst, das das weiche Band (13) stützt, wobei das Rohr (15) zumindest teilweise an mindestens einem seiner Enden mit einer Blende (25) in Kappenform verschlossen ist, und wobei deren offener Raum in Richtung der Außenseite des Rohrs (15) eine Aufnahme für das erste Lager (37) und die Aufhängungsmittel bildet.

8. Maschine nach einem der vorhergehenden Ansprüche, wobei die erste Stütze (7) und die zweite Stütze (9) in etwa flache Scheiben sind.

9. Maschine nach einem der vorhergehenden Ansprüche, wobei die erste Stütze (7) einen Vorsprung (73) umfasst und das erste Lager (37) eine Aufnahme (71) umfasst oder umgekehrt, wobei der Vorsprung (73) und die Aufnahme (71) wechselseitig angeordnet sind, um beim Anschlag zusammenzuwirken und die Amplitude der Verschiebungen des ersten Lagers (37) relativ zu dem Gestell (3) zu begrenzen.

10. Maschine nach einem der vorhergehenden Ansprüche, wobei die zweite Stütze (9) mit dem zweiten Lager (37) unter Zwischenanordnung von zusätzlichen Aufhängungsmitteln verbunden ist.

11. Maschine nach Anspruch 10, wobei die zusätzlichen Aufhängungsmittel den Aufhängungsmitteln gemäß einem der vorhergehenden Ansprüche entsprechen.

12. Maschine, die zwei Einheiten umfasst, wobei jede der Einheiten aus einer Maschine nach einem der vorhergehenden Ansprüche gebildet ist, wobei das Gestell (3) gemeinsam und spiegelbildlich entlang einer etwa vertikalen Ebene ausgebildet ist.

13. Maschine nach einem der vorhergehenden Ansprüche, wobei zumindest eines der Lager (37) ein Gehäuse bildet, das mindestens ein Bremsmittel (190) umfasst, das dazu geeignet ist, auf gesteuerte Art ein Gegenmoment zwischen dem Lager (37) und der Walze (11) auszuüben.

14. Maschine nach einem der vorhergehenden Ansprüche, das eine Transportposition und eine Arbeitsposition umfasst und ein Neutralisierungsmittel für die Aufhängungsmittel umfasst, derart, dass die Bewegungen der Lager (37) relativ zu dem Gestell (3) blockiert werden, wobei das Neutralisierungsmittel in der Arbeitsposition aktivierbar ist.

15. Maschine nach einem der Ansprüche 11 bis 14, das mindestens zwei Dämpfungsorgane (151, 153) umfasst, die einerseits mit der ersten Stütze (7) und andererseits mit dem ersten Lager (37) verbunden sind bzw. einerseits mit der zweiten Stütze (9) und andererseits mit dem zweiten Lager (37) verbunden sind, wobei jedes der Dämpfungsorgane (151, 153) einen Hydraulikzylinder umfasst, der mit einem jeweiligen hydropneumatischen Akkumulator (173) verbunden ist, und zwar unabhängig voneinander.

16. Maschine nach einem der Ansprüche 11 bis 14, die mindestens zwei Dämpfungsorgane (151, 153) umfasst, die einerseits mit der ersten Stütze (7) und andererseits mit dem ersten Lager (37) verbunden sind bzw. einerseits mit der zweiten Stütze (9) und andererseits mit dem zweiten Lager (37) verbunden sind, wobei jedes der Dämpfungsorgane (151, 153) einen Hydraulikzylinder umfasst, dessen eine Kammer (171) jeweils mit einem gemeinsamen hydropneumatischen Akkumulator (173) verbunden ist.

17. Maschine nach Anspruch 16, wobei jedes der Dämpfungsorgane (151, 153) mit dem gemeinsamen Akkumulator (173) unter Zwischenanordnung eines doppeltwirkenden Kolbens verbunden ist, wobei die Kolben gegenseitig derart gesteuert werden, dass deren Hübe proportional sind.

## Claims

1. A ground shaping machine, particularly an agricultural machine, comprising
a frame (3),
at least one roller (11) fitted with a flexible tire (13),
a first bearing (37) and a second bearing (37) whereby the roller (11) can rotate about a substantially horizontal axis (XX) in the working position, the first (37) and the second (37) bearing being positioned one at each end of the roller (11),
the frame (3) including a first support (7) and a second support (9), the first support (7) at least being connected to the first bearing (37) through suspension means, the second support (9) being connected to the second bearing (37), **characterized in that** the suspension means include
a mechanism with an upper arm (101) and a lower arm (121), both substantially horizontal and perpendicular to the axis (XX) of rotation of the roller (11), each of the upper (101) and lower (121) arms being connected by a joint (103, 105, 123, 125) to the first support (7) on the one hand, and to the first bearing (37) on the other hand, the mechanism forming a deformable quadrilateral, and
a substantially vertical resilient return member (141) connected by a joint (143, 145) to the first support (7) on the one hand, and to the first bearing (37) on the other hand.

2. A machine according to claim 1, wherein the suspension means further comprise a supplementary arm (161) connected by a joint (163, 165) to the first support (7) or to the second support (9) on the one hand, and to the first bearing (37) or to the second bearing (37) respectively on the other hand, in a direction substantially parallel to the axis (XX) of rotation of the roller (11).

3. A machine according to any of the preceding claims, further comprising a substantially vertical damping member connected to the first support (7) on the one hand, and to the first bearing (37) on the other hand.

4. A machine according to claim 3, wherein the resilient return means (141) and the damping member are combined with each other.

5. A machine according to any of the preceding claims, wherein the joints (103, 105, 123, 125) of the upper arm (101) and lower arm (121) are ball joints.

6. A machine according to any of the preceding claims, wherein the roller (11) comprises a tube (15) supporting the flexible tire (13), the suspension means being housed, in a rest position, substantially within the tube (15).

7. A machine according to any of the preceding claims, wherein the roller (11) comprises a tube (15) supporting the flexible tire (13), the tube (15) being at least partially closed at one or both of its ends by a dome-shaped end shield (25), the open space facing towards the outside of the tube (15) forming a housing for the first bearing (37) and the suspension means.

8. A machine according to any of the preceding claims, wherein the first support (7) and the second support (9) are substantially flat plates.

9. A machine according to any of the preceding claims, wherein the first support (7) comprises a pin (73) and the first bearing (37) comprises a housing (71), or vice versa, the pin (73) and the housing (71) being arranged with respect to each other so as to interact by forming a stop and limit the extent of the displacement of the first bearing (37) with respect to the frame (3).

10. A machine according to any of the preceding claims, wherein the second support (9) is connected to the second bearing (37) through supplementary suspension means.

11. A machine according to claim 10, wherein the supplementary suspension means conform to the suspension means according to any of the preceding claims.

12. A machine comprising two assemblies, each of the assemblies being formed by a machine according to any of the preceding claims, the frames (3) being common and mirror images of each other about a substantially vertical plane.

13. A machine according to any of the preceding claims, wherein at least one of the bearings (37) forms a casing which houses at least one braking means (190) for exerting a resistant torque in a controlled manner between the bearing (37) and the roller (11).

14. A machine according to any of the preceding claims, having a transportation position and a working position and comprising a means for neutralizing the suspension means such that the movements of the bearings (37) with respect to the frame (3) can be blocked, the neutralization means being activatable in the working position.

15. A machine according to any of claims 11 to 14, comprising at least two damping members (151, 153) connected, respectively, to the first support (7) on the one hand and to the first bearing (37) on the other hand, and to the second support (9) on the one hand and to the second bearing (37) on the other hand, each of the damping members (151, 153) comprising a hydraulic actuator connected to a respective hydropneumatic accumulator (173) which is independent of the other accumulator.

16. A machine according to any of claims 11 to 14, comprising at least two damping members (151, 153) connected, respectively, to the first support (7) on the one hand and to the first bearing (37) on the other hand, and to the second support (9) on the one hand and to the second bearing (37) on the other hand, each of the damping members (151, 153) comprising a hydraulic actuator whose respective chamber (171) is connected to a common hydropneumatic accumulator (173).

17. A machine according to claim 16, wherein each of the damping members (151, 153) is connected to the common accumulator (173) through a double-acting piston, the double-acting pistons being controlled by each other in such a way that their strokes are proportional.
